(19) Europäisches Patentamt
European Patent Office
Office européen des brevets

(11) EP 3 623 887 A1

(12) EUROPÄISCHE PATENTANMELDUNG

(43) Veröffentlichungstag:
18.03.2020 Patentblatt 2020/12

(51) Int Cl.:
G05B 19/416 (2006.01)

(21) Anmeldenummer: 18194060.2

(22) Anmeldetag: 12.09.2018

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(71) Anmelder: Siemens Aktiengesellschaft
80333 München (DE)

(72) Erfinder: Die Erfindernennung liegt noch nicht vor

(54) **ZEITOPTIMIERTE BEWEGUNGSFÜHRUNG ZWISCHEN BAHNABSCHNITTEN**

(57) Eine Maschine weist eine Anzahl von lagegeregelten Achsen (1) auf, die in ihrer Gesamtheit eine Verfahrbewegung zweier Elemente (2, 3) der Maschine relativ zueinander bewirken. Die Steuereinrichtung (4) steuert die Achsen (1) der Maschine derart an, dass die Elemente (2, 3) relativ zueinander sequenziell nacheinander Bahnabschnitte (B1 bis B3) mit für die Bahnabschnitte (B1 bis B3) definierten Geschwindigkeitsverläufen und dadurch definierten Beschleunigungsverläufen abfährt. Die Bahnabschnitte (B1 bis B3) weisen jeweils einen Anfang (A1 bis A3) und ein Ende (E1 bis E3) auf, wobei das Ende (E1) und der Anfang (A2) unmittelbar nachfolgender Bahnabschnitte (B1, B2) sich in der Lage mindestens einer Achse (1) unterscheiden. Die Steuereinrichtung (4) ermittelt für die Achsen (1) eine zeitoptimale, in Ort (x), Geschwindigkeit (v) und Beschleunigung (a) stetige und in Geschwindigkeit (v), Beschleunigung (a) und Ruck (r) begrenzte Bewegungsführung vom Ende (E1) des einen zum Anfang (A2) des nachfolgenden Bahnabschnitts (B1, B2). Die Ermittlung erfolgt derart, dass die Bewegung der Elemente (2, 3) relativ zu einander am Ende (E1) des einen Bahnabschnitts (B1) stetig in Ort (x), Geschwindigkeit (v) und Beschleunigung (a) in die ermittelte Bewegungsführung übergeht und die Bewegungsführung am Anfang (A2) des anderen Bahnabschnitts (B2) stetig in Ort (x), Geschwindigkeit (v) und Beschleunigung (a) in den anderen Bahnabschnitt (B2) übergeht.

FIG 2

EP 3 623 887 A1

**Beschreibung**

Die vorliegende Erfindung geht aus von einem Betriebsverfahren für eine Maschine, die eine Anzahl von lagegeregelten Achsen aufweist, die in ihrer Gesamtheit eine Verfahrbewegung eines ersten Elements der Maschine relativ zu einem zweiten Element der Maschine bewirken,

- wobei die Steuereinrichtung die Achsen der Maschine derart ansteuert, dass das erste Element der Maschine relativ zu dem zweiten Element der Maschine sequenziell nacheinander mehrere vorbestimmte Bahnabschnitte mit einem für den jeweiligen Bahnabschnitt definierten jeweiligen Geschwindigkeitsverlauf und einem für den jeweiligen Bahnabschnitt durch den jeweiligen Geschwindigkeitsverlauf definierten jeweiligen Beschleunigungsverlauf abfährt,
- wobei die Bahnabschnitte jeweils einen Anfang und ein Ende aufweisen und das Ende eines jeweiligen Bahnabschnitts und der Anfang des jeweils unmittelbar nachfolgenden Bahnabschnitts sich in der Lage mindestens einer der lagegeregelten Achsen unterscheiden.

Die vorliegende Erfindung geht weiterhin aus von einem Steuerprogramm für eine Steuereinrichtung, wobei das Steuerprogramm Maschinencode aufweist, der von der Steuereinrichtung abarbeitbar ist, wobei die Abarbeitung des Maschinencodes durch die Steuereinrichtung bewirkt, dass die Steuereinrichtung eine Maschine, die eine Anzahl von lagegeregelten Achsen aufweist, die in ihrer Gesamtheit eine Verfahrbewegung eines ersten Elements der Maschine relativ zu einem zweiten Element der Maschine bewirken, gemäß einem derartigen Betriebsverfahren steuert.

Die vorliegende Erfindung geht weiterhin aus von einer Steuereinrichtung für eine Maschine, die eine Anzahl von lagegeregelten Achsen aufweist, die in ihrer Gesamtheit eine Verfahrbewegung eines ersten Elements der Maschine relativ zu einem zweiten Element der Maschine bewirken, wobei die Steuereinrichtung mit einem derartigen Steuerprogramm programmiert ist, so dass die Steuereinrichtung die Maschine gemäß einem derartigen Betriebsverfahren steuert.

Die vorliegende Erfindung geht weiterhin aus von einer Maschine, die eine Anzahl von lagegeregelten Achsen aufweist, die in ihrer Gesamtheit eine Verfahrbewegung eines ersten Elements der Maschine relativ zu einem zweiten Element der Maschine bewirken, wobei die Maschine eine derartige Steuereinrichtung aufweist, welche die Achsen der Maschine gemäß einem derartigen Betriebsverfahren steuert.

Bei Werkzeugmaschinen und anderen Produktionsmaschinen sind neben den sogenannten produktiven Wegabschnitten, bei denen die Maschine ihre eigentliche technologische Aufgabe ausführt - beispielsweise das Werkzeug relativ zu einem Werkstück eine Bearbeitung durchführt -, auch andere, nichtproduktive Wegabschnitte vorhanden. Derartige Wegabschnitte sind beispielsweise bei einer Werkzeugmaschine Anfahrbewegungen, Abfahrbewegungen und Umsetzbewegungen zwischen produktiven Wegabschnitten, Werkzeugwechsel, Werkstückwechsel, Kalibrierungsfahrten und andere mehr. Da die Zeit für derartige Bewegungen nicht produktiv ist, sollten derartige Zeiten so kurz wie möglich gehalten werden, also zeitoptimal sein.

In dem Fachaufsatz "On-Line Planning of Time-Optimal, Jerk-Limited Trajectories" von Robert Haschke et al., abgerufen am 17.08.2018 unter dem Link https://ni.www.techfak.uni-biele-feld.de/files/HaschkeWeitnauerRitter08-OPT.pdf, ist bekannt, online eine zeitoptimale, ruckbegrenzte Bewegung zu ermitteln. Die Startbedingungen der Bewegung können bezüglich Ort, Geschwindigkeit und Beschleunigung vorgegeben werden. Am Ende der ermittelten Bewegung müssen jedoch sowohl die Beschleunigung als auch die Geschwindigkeit den Wert 0 aufweisen. Die in dem Fachaufsatz erläuterte Vorgehensweise ist daher ungeeignet, bei Sequenz von aufeinanderfolgenden Bahnabschnitten, die jeweils mit einem für den jeweiligen Bahnabschnitt definierten Geschwindigkeitsverlauf und einem für den Bahnabschnitt durch den Geschwindigkeitsverlauf definierten Beschleunigungsverlauf abgefahren werden sollen, eine derart zeitoptimale Lösung zu ermitteln.

Die Aufgabe der vorliegenden Erfindung besteht darin, Möglichkeiten zu schaffen, mittels derer die Effizienz des Betriebs einer Maschine der eingangs genannten Art maximiert werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 7.

Erfindungsgemäß wird ein Betriebsverfahren der eingangs genannten Art dadurch ausgestaltet, dass die Steuereinrichtung für die Achsen eine zeitoptimale, in Ort, Geschwindigkeit und Beschleunigung stetige und in Geschwindigkeit, Beschleunigung und Ruck begrenzte Bewegungsführung vom Ende eines jeweiligen Bahnabschnitts zum Anfang des jeweils unmittelbar nachfolgenden Bahnabschnitts ermittelt, so dass die Bewegung des ersten Elements der Maschine relativ zu dem zweiten Element der Maschine am Ende des jeweiligen Bahnabschnitts stetig in Ort, Geschwindigkeit und Beschleunigung in die ermittelte Bewegungsführung übergeht und die Bewegungsführung am Anfang des jeweils unmittelbar nachfolgenden Bahnabschnitts stetig in Ort, Geschwindigkeit und Beschleunigung in den jeweils unmittelbar nachfolgenden Bahnabschnitt übergeht.

Die Steuereinrichtung ermittelt also für die einzelnen Achsen der Maschine eine jeweilige Achsenführung, wobei die Achsenführungen in ihrer Gesamtheit mit der Bewegungsführung korrespondieren.

In der Regel ist die Anzahl an Achsen größer als 1. In diesem Fall müssen die Achsenführungen derart koordiniert werden, dass die Achsen für ihre jeweilige Achsenführung gleichlange Zeiten benötigen. Dies kann beispielsweise dadurch gewährleistet werden, dass die Steuereinrichtung zum Ermitteln der Bewegungsführung

- zunächst für die Achsen unabhängig voneinander eine jeweilige zeitoptimale, in Ort, Geschwindigkeit und Beschleunigung stetige und in Geschwindigkeit, Beschleunigung und Ruck begrenzte vorläufige Achsenführung vom Ende eines jeweiligen Bahnabschnitts zum Anfang des jeweils unmittelbar nachfolgenden Bahnabschnitts ermittelt, so dass - bezogen auf die jeweils betrachtete Achse - die Bewegung des ersten Elements der Maschine relativ zu dem zweiten Element der Maschine am Ende des jeweiligen Bahnabschnitts stetig in Ort, Geschwindigkeit und Beschleunigung in die ermittelte vorläufige Achsenführung übergeht und die vorläufige Achsenführung am Anfang des jeweils unmittelbar nachfolgenden Bahnabschnitts stetig in Ort, Geschwindigkeit und Beschleunigung in den jeweils unmittelbar nachfolgenden Bahnabschnitt übergeht,
- für die Achsen die für die jeweilige vorläufige Achsenführung benötigte Achsenzeit ermittelt,
- die vorläufige Achsenführung mit der größten benötigten Achsenzeit für diese Achse unverändert als endgültige Achsenführung übernimmt,
- für die Achsen mit einer kleineren als der größten benötigten Achsenzeit die jeweilige vorläufige Achsenführung modifiziert, so dass die Stetigkeit in Ort, Geschwindigkeit und Beschleunigung erhalten bleibt und die zugehörige Achsenzeit mit der größten benötigten Achsenzeit übereinstimmt, und die so ermittelten modifizierten Achsenführungen als endgültige Achsenführungen übernimmt.

In dem Fall, dass nur eine einzige Achse vorhanden ist, entartet dieser Sachverhalt zu einer Selbstverständlichkeit. Denn das erste mit Spiegelstrich abgesetzte Merkmal entspricht für die jeweilige Achse der gleichen Vorgehensweise die bereits in Verbindung mit dem Hauptanspruch allgemein für die Achsen erwähnt ist. Die Ermittlung der Achsenzeit kann in diesem Fall entfallen, da lediglich die vorläufige Achsenführung der einen Achse übernommen werden muss und weitere Achsen, deren vorläufige Achsenführungen modifiziert werden müssten, nicht vorhanden sind.

Zum Modifizieren der jeweiligen vorläufigen Achsenführung kann die Steuereinrichtung beispielsweise den Betrag der Zielgeschwindigkeit reduzieren und basierend auf der betragsmäßig entsprechend reduzierten Zielgeschwindigkeit erneut die jeweilige vorläufige Achsenführung und die zugehörige Achsenzeit ermitteln, bis die zugehörige Achsenzeit mit der größten benötigten Achsenzeit übereinstimmt. Diese Vorgehensweise ist besonders zuverlässig und relativ einfach.

Um die jeweilige vorläufige Achsenführung auf einfache,zuverlässige und auch schnelle Weise ermitteln zu können, ist vorgesehen,

- dass die Steuereinrichtung zum Ermitteln der jeweiligen vorläufigen Achsenführung die jeweilige vorläufige Achsenführung in sieben unmittelbar aufeinanderfolgende Phasen unterteilt, wobei

  -- jede der aufeinanderfolgenden Phasen eine jeweilige zumindest nicht negative Zeitdauer aufweist,
  -- in der ersten Phase und in der siebten Phase der Ruck positiv oder negativ, betragsmäßig aber maximal ist,
  -- in der dritten Phase der Ruck invers zum Ruck in der ersten Phase ist und in der fünften Phase der Ruck invers zum Ruck in der siebten Phase ist,
  -- in der zweiten und sechsten Phase der Ruck 0 ist,
  -- in der vierten Phase der Ruck und die Beschleunigung 0 sind und
  -- die Geschwindigkeit in der vierten Phase die Zielgeschwindigkeit ist,

- dass die Steuereinrichtung die Zielgeschwindigkeit nacheinander zunächst mit positiven und negativen Vorzeichen auf den maximal zulässigen Wert setzt,
- dass die Steuereinrichtung für den jeweiligen Wert der Zielgeschwindigkeit

  -- die zugehörigen Abschnitte der jeweiligen vorläufigen Achsenführung für die erste, zweite und dritte Phase ermittelt, so dass am Ende der dritten Phase die Beschleunigung 0 ist und die Geschwindigkeit gleich der jeweiligen Zielgeschwindigkeit ist,
  -- die zugehörigen Abschnitte der jeweiligen vorläufigen Achsenführung für die fünfte, sechste und siebte Phase ermittelt, so dass am Anfang der fünften Phase die Beschleunigung 0 ist und die Geschwindigkeit gleich der jeweiligen Zielgeschwindigkeit ist,
  -- prüft, ob angesichts der ermittelten ersten bis dritten Phase und der ermittelten fünften bis siebten Phase eine theoretische Zeitdauer der vierten Phase größer als 0 oder gleich 0 ist,
  -- bejahendenfalls die Abschnitte der jeweiligen vorläufigen Achsenführung für die erste bis dritte und fünfte bis siebte Phase übernimmt und für die vierte Phase die ermittelte theoretische Zeitdauer als Zeitdauer übernimmt,
  -- verneinendenfalls die Zeitdauer der vierten Phase auf 0 setzt, so dass im Ergebnis die dritte Phase und die fünfte Phase unmittelbar aneinander angrenzen, und weiterhin den Betrag der Zielgeschwindigkeit reduziert und die Ermittlung der jeweiligen vorläufigen Achsenführung für erste, zweite und dritte Phase sowie für die fünfte, sechste und siebte Phase mit dem entsprechend modifizierten Wert der Zielgeschwindigkeit wiederholt, bis entweder die dritte und die fünfte Phase stetig in Ort, Geschwindigkeit und Beschleunigung ineinander übergehen oder die Steuereinrichtung feststellt, dass für das jeweilige Vorzeichen der Zielgeschwindigkeit eine vorläufige Achsenführung nicht ermittelbar ist.

In der Regel wird zwar für eines der beiden Vorzeichen der Geschwindigkeit in der vierten Phase eine vorläufige Achsenführung nicht zu ermitteln sein. Für mindestens eines der beiden Vorzeichen ist jedoch die Achsenführung ermittelbar. Wenn eine vorläufige Achsenführung nur für eines der beiden Vorzeichen ermittelt werden kann, ist diese Achsenführung die gesuchte zeitoptimale Achsenführung. Wenn ausnahmsweise für beide Vorzeichen eine Achsenführung ermittelt werden kann, wird für diese beiden Achsenführungen die jeweils benötigte Zeit ermittelt und im Ergebnis diejenige Achsenführung verwendet, welche die kleinere Zeit benötigt.

In vielen Fällen ist der Steuereinrichtung in dem durch die möglichen Bewegungsbereiche der Achsen aufgespannten Raum ein zulässiger Bereich bekannt, innerhalb dessen die von ihr ermittelte Bewegungsführung erfolgen muss. In diesem Fall geht die Steuereinrichtung vorzugsweise derart vor, dass sie

- prüft, ob eine ausschließlich auf dem Ende eines jeweiligen Bahnabschnitts und dem Anfang des jeweils unmittelbar nachfolgenden Bahnabschnitts basierende Bewegungsführung innerhalb des zulässigen Bereichs erfolgen würde,
- bejahendenfalls die Bewegungsführung so wie obenstehend erläutert ermittelt und
- verneinendenfalls die Bewegungsführung durch Festlegung von anzufahrenden Zwischenpunkten in mehrere unmittelbar aufeinanderfolgende, in Ort, Geschwindigkeit und Beschleunigung stetige sowie Geschwindigkeit, Beschleunigung und Ruck begrenzte Teilbewegungen unterteilt und
- die Teilbewegungen so wie eine jeweilige Bewegungsführung im Sinne der Erfindung vom Anfang des jeweiligen Teilbereichs zum Ende des jeweiligen Teilbereichs ermittelt.

Dadurch ist auch eine Berücksichtigung eines zulässigen Bereichs - beispielsweise zur Vermeidung von Kollisionen - möglich.

Es ist im Einzelfall möglich, dass diejenigen Teilbewegungen, welche weder an das Ende des jeweiligen Bahnabschnitts noch an den Anfang des jeweils nachfolgenden Bahnabschnitts angrenzen, am Anfang und/oder am Ende der jeweiligen Teilbewegung eine Geschwindigkeit und eine Beschleunigung von 0 aufweisen. Vorzugsweise weist jedoch bei mindestens einer der Teilbewegungen mindestens eine der Achsen sowohl am Anfang als auch am Ende dieser Teilbewegung eine von 0 verschiedene Geschwindigkeit und/oder eine von 0 verschiedene Beschleunigung auf. Dadurch kann die insgesamt benötigte Zeit zum Abfahren aller Teilbewegungen reduziert werden.

Es ist möglich, dass die Anfänge und die Enden der Bahnabschnitte der Steuereinrichtung als solche vorgegeben sind. Insbesondere innerhalb einer Bearbeitungsbewegung kann dies sinnvoll sein. Alternativ ist es möglich, dass die Steuereinrichtung die Anfänge und/oder die Enden der Bahnabschnitte selbsttätig ermittelt. Beispielsweise kann die Steuereinrichtung erkennen, wenn sie nach einem Werkzeugwechsel erneut eine Bearbeitung aufnehmen soll. Eine derartige Bewegung kann stets als Bewegungsführung im Sinne der Erfindung realisiert werden. Auch Mischformen sind denkbar, dass also zwar ein Teil der Anfänge und Enden der Steuereinrichtung vorgegeben ist, die Steuereinrichtung jedoch einen anderen Teil der Anfänge und/oder der Enden selbsttätig ermittelt.

Das erfindungsgemäße Betriebsverfahren führt zu einer schnellen Ermittlung der Bewegungsführung. Dadurch ist es möglich, dass die Steuereinrichtung das Betriebsverfahren online ausführt.

Die Aufgabe wird weiterhin durch ein Steuerprogramm mit den Merkmalen des Anspruchs 9 gelöst. Erfindungsgemäß wird ein Steuerprogramm der eingangs genannten Art derart ausgestaltet, dass die Abarbeitung des Maschinencodes durch die Steuereinrichtung bewirkt, dass die Steuereinrichtung eine Maschine, die eine Anzahl von lagegeregelten Achsen aufweist, die in ihrer Gesamtheit eine Verfahrbewegung eines ersten Elements der Maschine relativ zu einem zweiten Element der Maschine bewirken, gemäß einem erfindungsgemäßen Betriebsverfahren steuert.

Die Aufgabe wird weiterhin durch eine Steuereinrichtung für eine Maschine mit den Merkmalen des Anspruchs 10 gelöst. Erfindungsgemäß ist eine Steuereinrichtung der eingangs genannten Art mit einem erfindungsgemäßen Steuerprogramm programmiert, so dass die Abarbeitung des Maschinencodes bewirkt, dass die Steuereinrichtung die Maschine gemäß einem erfindungsgemäßen Betriebsverfahren steuert.

Die Aufgabe wird weiterhin durch eine Maschine mit den Merkmalen des Anspruchs 10 gelöst. Erfindungsgemäß ist bei einer Maschine der eingangs genannten Art die Steuereinrichtung der Maschine erfindungsgemäß ausgebildet, so dass die Steuereinrichtung die Achsen der Maschine gemäß einem erfindungsgemäßen Betriebsverfahren steuert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1          eine Maschine,

FIG 2          mögliche Bahnabschnitte und Bewegungsführungen,

FIG 3 bis 5    ein Ablaufdiagramm zur Ermittlung einer Achsenführung,

FIG 6          ein Ablaufdiagramm zur Abstimmung mehrerer Achsenführungen,

FIG 7          ein Ablaufdiagramm zur Ermittlung einer modifizierten Achsenführung,

FIG 8          mögliche Bahnabschnitte und Bewegungsführungen und

FIG 9          ein Ablaufdiagramm zur Ermittlung mehrerer Teilbewegungen.

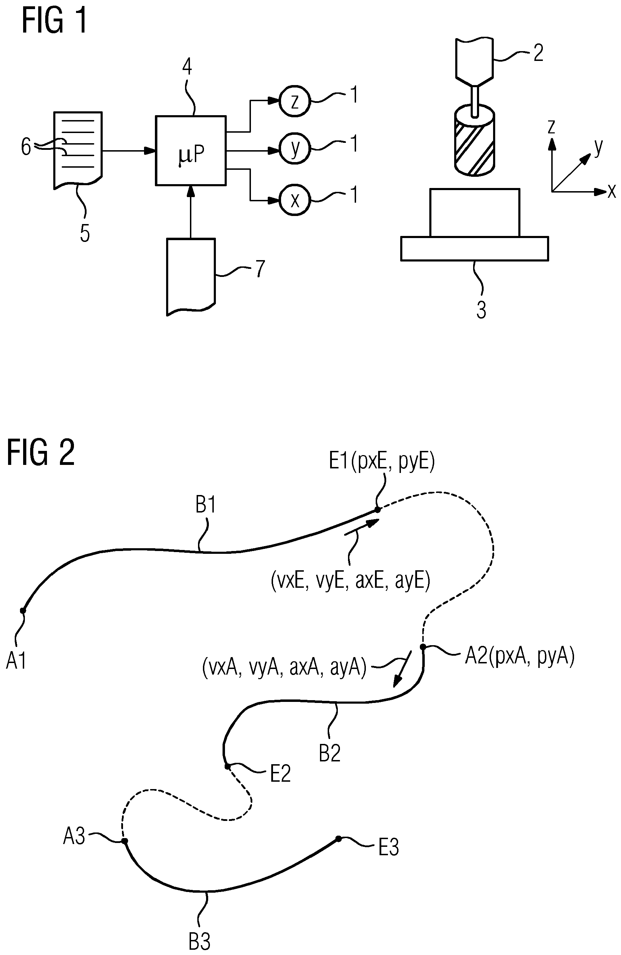

Gemäß FIG 1 weist eine Maschine eine Anzahl von lagegeregelten Achsen 1 auf. Minimal ist eine einzige lagegeregelte Achse 1 vorhanden. In der Regel sind jedoch mehrere lagegeregelte Achsen 1 vorhanden. Mittels der Achsen 1 in ihrer Gesamtheit wird - eine entsprechende Ansteuerung der Achsen 1 vorausgesetzt - eine Verfahrbewegung eines ersten Elements 2 der Maschine relativ zu einem zweiten Element 3 der Maschine bewirkt. Beispielsweise kann ein Werkzeughalter (= erstes Element 2) der Maschine relativ zu einem Werkstückhalter 3 (= zweites Element) der Maschine verfahren werden, so dass ein im Werkzeughalter gehaltenes Werkzeug entsprechend der Verfahrbewegung eine Kontur eines in dem Werkstückhalter gehaltenen Werkstücks 4 verändert.

In FIG 1 sind drei Achsen 1 dargestellt, mittels derer eine Relativbewegung in drei translatorischen Richtungen x, y, z möglich ist. Diese Darstellung ist jedoch nur rein beispielhaft. Es könnten auch mehr oder weniger Achsen 1 vorhanden sein. Weiterhin sind - sei es alternativ, sei es zusätzlich zu einer Verfahrbewegung in translatorischen Richtungen x, y, z - auch Verfahrbewegungen in rotatorischen Orientierungen möglich.

In dem obenstehend erläuterten Beispiel ist die Maschine eine Werkzeugmaschine. Diese Ausgestaltung ist aber nur rein beispielhaft. Es kann sich auch um eine andere Maschine handeln, beispielsweise einen sechsachsigen Roboter (die Anzahl an Achsen des Roboters kann auch größer oder kleiner sein) oder eine andere Maschine.

Die Maschine weist eine Steuereinrichtung 4 auf. Die Steuereinrichtung 4 steuert die Achsen 1 der Maschine. Im Falle einer Werkzeugmaschine ist die Steuereinrichtung 4 in der Regel als numerische Steuerung (CNC) ausgebildet. Im Falle einer anderen Maschine ist die Steuereinrichtung 4 in der Regel als Bewegungssteuerung ausgebildet. In beiden Fällen erfolgt eine getaktete Vorgabe von Lagesollwerten an die Achsen 1, beispielsweise alle 250 $\mu$s oder alle 125 ps. Die unmittelbar aufeinanderfolgenden Lagesollwerte weisen jeweils nur einen kleinen Versatz relativ zueinander auf. Im Ergebnis wird durch die Ansteuerung der Achsen 1 durch die Steuereinrichtung 4 bewirkt, dass die Achsen 1 eine lagegeführte Bewegung des ersten Elements 2 relativ zum zweiten Element 3 bewirken. Das erste Element 2 bewegt sich relativ zum zweiten Element 3 somit bezüglich jeder Achse 1 mit einer jeweiligen Geschwindigkeit und einer jeweiligen Beschleunigung, wobei die jeweilige Geschwindigkeit und die jeweilige Beschleunigung durch die Abfolge von Lagesollwerten der jeweiligen Achse 1 bestimmt ist oder sogar explizit vorgegeben ist.

Die Steuereinrichtung 4 ist mit einem Steuerprogramm 5 programmiert. Das Steuerprogramm 5 umfasst Maschinencode 6, der von der Steuereinrichtung 4 abarbeitbar ist. Die Programmierung der Steuereinrichtung 4 mit dem Steuerprogramm 5 bewirkt, dass die Steuereinrichtung 4 im Betrieb den Maschinencode 6 abarbeitet. Die Abarbeitung des Maschinencodes 6 bewirkt, dass die Steuereinrichtung 4 die Maschine gemäß einem Betriebsverfahren steuert, das nachstehend näher erläutert wird.

Die Steuereinrichtung 4 steuert die Maschine in Echtzeit. Die Steuereinrichtung 4 führt das Betriebsverfahren daher online aus. "Online" bedeutet in diesem Zusammenhang, dass Berechnungen und Ermittlungen von Lagesollwerten und daraus abgeleiteten Werten, welche die Steuereinrichtung 4 ausführt, binnen weniger Millisekunden abgeschlossen sein müssen, damit die ermittelten Lagesollwerte zeitrichtig an die Achsen 1 ausgegeben werden können.

Im Rahmen der Abarbeitung des Maschinencodes 6 steuert die Steuereinrichtung 4 die Achsen 1 derart an, dass das erste Element 2 - siehe die Darstellung in FIG 2 - relativ zu dem zweiten Element 3 sequenziell nacheinander mehrere vorbestimmte Bahnabschnitte B1 bis B3 abfährt. Die in FIG 2 dargestellte Anzahl von drei Bahnabschnitten B1 bis B3 ist nur rein beispielhaft. In der Regel ist die Anzahl von Bahnabschnitten B1 bis B3 erheblich größer und liegt im Bereich von mehreren 100 oder mehreren 1000. Die Bahnabschnitte B1 bis B3 sind in der Regel durch ein Nutzprogramm 7 bestimmt, beispielsweise im Fall einer Werkzeugmaschine durch ein Teileprogramm.

Der jeweilige Bahnabschnitt B1 bis B3 wird mit einem definierten Geschwindigkeitsverlauf und einem definierten Beschleunigungsverlauf abgefahren. Sowohl die Geschwindigkeit als auch die Beschleunigung können innerhalb des jeweiligen Bahnabschnitts B1 bis B3 zwar variieren und auch von Bahnabschnitt B1 bis B3 zu Bahnabschnitt B1 bis B3 voneinander verschieden sein. Sowohl die Geschwindigkeit als auch die Beschleunigung ändern sich innerhalb des jeweiligen Bahnabschnitts B1 bis B3 aber nicht abrupt, sondern nur stetig. Die Bahnabschnitte B1 bis B3 sind also in sich gesehen glatte Kurven. Der Übergang von Bahnabschnitt B1 bis B3 zu Bahnabschnitt B1 bis B3 ist jedoch diskontinuierlich. "Diskontinuierlich" bedeutet, dass die Bahnabschnitte B1 bis B3 jeweils einen Anfang A1 bis A3 und ein Ende E1 bis E3 aufweisen und dass das Ende E1 bis E3 eines jeweiligen Bahnabschnitts B1 bis B3 und der Anfang A1 bis A3 des jeweils unmittelbar nachfolgenden Bahnabschnitts B1 bis B3 - beispielsweise das Ende E1 des Bahnabschnitts B1 und der Anfang A2 des Bahnabschnitts B2 - sich in der Lage mindestens einer der lagegeregelten Achsen 1 unterscheiden.

Die Bahnabschnitte B1 bis B3 (einschließlich deren Abfolge) und damit auch die Anfänge A1 bis A3 und die Enden E1 bis E3 der Bahnabschnitte B1 bis B3 können der Steuereinrichtung 4 als solche vorgegeben sein. Die Bewegungsführung für die Übergänge vom Ende E1 bis E3 eines Bahnabschnitts B1 bis B3 zum Anfang A1 bis A3 des jeweils nachfolgenden Bahnabschnitts B1 bis B3 - in FIG 2 gestrichelt eingezeichnet - sind der Steuereinrichtung 4 hingegen nicht vorgegeben.

Alternativ ist es möglich, dass die Steuereinrichtung 4 die Anfänge A1 bis A3 und/oder die Enden E1 bis E3 der Bahnabschnitte B1 bis B3 selbsttätig ermittelt. Wenn beispielsweise bei einem Teileprogramm einer Werkzeugmaschine zunächst eine Bearbeitung des Werkstücks und sodann ein Werkzeugwechsel erfolgen soll, entspricht die Bearbeitung des Werkstücks einem Bahnabschnitt B1 bis B3 und der Ort, an dem das verwendete Werkzeug abgelegt werden soll, einem anzufahrenden Zielpunkt. Auch andere Konstellationen, in denen eine selbstständige Bestimmung der Bahnabschnitte B1 bis B3 erfolgen kann, sind denkbar. Beispielsweise kann der Steuereinrichtung 4 aufgrund vorheriger Bearbeitungsvorgänge bekannt sein, an welchen Stellen sich das Werkstück nicht befinden kann, so dass in diesem Bereich eine programmierte Verfahrbewegung nicht exakt eingehalten werden muss. Die Grenzen des Bereichs, in dem die programmierte Verfahrbewegung nicht eingehalten werden muss, können in diesem Fall von der Steuereinrichtung 4 als das Ende E1 bis E3 eines Bahnabschnitts B1 bis B3 und der Anfang A1 bis A3 des nachfolgenden Bahnabschnitts B1 bis B3 angesehen und bestimmt werden.

Die Ermittlung der Bewegungsführung des ersten Elements 2 relativ zum zweiten Element 3 vom Ende E1 bis E3 eines jeweiligen Bahnabschnitts B1 bis B3 zum Anfang A1 bis A3 des jeweils nachfolgenden Bandabschnitts B1 bis B3 ist Gegenstand der vorliegenden Erfindung.

Die vorliegende Erfindung wird nachstehend detailliert im wesentlichen in Verbindung mit einer einzelnen Achse 1 erläutert. In Bezug auf diese Achse 1 verwendete Bezugszeichen enthalten stets den Buchstaben "x". Diese Achse 1 wird weiterhin als translatorisch wirkende Achse 1 angenommen. Die prinzipiell selbe Vorgehensweise ist jedoch auch bezüglich einer anders wirkenden Achse 1 möglich, insbesondere bezüglich einer rotatorisch wirkenden Achse 1. Weiterhin ist - wieder bezogen auf die jeweilige andere Achse 1 - die prinzipiell selbe Vorgehensweise bezüglich der anderen Achsen 1 möglich.

Soweit es die Abstimmung mehrerer Achsen 1 miteinander betrifft, wird weiterhin nur die Abstimmung zwischen zwei Achsen 1 erläutert. Hierbei wird angenommen, dass auch die zweite Achse 1 eine translatorisch wirkende Achse 1 ist. In Bezug auf diese Achse 1 verwendeten Bezugszeichen enthalten stets den Buchstaben "y". Auf ein und dieselbe Art und Weise können jedoch auch mehr als zwei Achsen 1 aufeinander abgestimmt werden, und zwar unabhängig davon, ob es sich bei den Achsen 1 um translatorisch wirkende, um rotatorisch wirkende oder um andersartig wirkende Achsen 1 handelt.

Die vorliegende Erfindung wird weiterhin für den Übergang vom Ende E1 des Bahnabschnitts B1 zum Anfang A2 des Bahnabschnitts B2 erläutert. Die analoge Vorgehensweise ist jedoch auch für die Übergänge zwischen anderen Bahnabschnitte B1 bis B3 möglich, beispielsweise vom Bahnabschnitt B2 zum Bahnabschnitt B3.

Die Bahnabschnitte B1 bis B3 werden, wie bereits erwähnt, mit einem definierten Geschwindigkeitsverlauf und einem definierten Beschleunigungsverlauf abgefahren. Am Ende E1 des Bahnabschnitts B1 weisen somit die beiden Achsen 1 die Lagen pxE und pyE, die Geschwindigkeiten vxE und vyE sowie die Beschleunigungen axE und ayE auf, wobei all diese Werte durch den Bahnabschnitt B1 bestimmt sind. In analoger Weise weisen die beiden Achsen 1 am Anfang A2 des Bahnabschnitts B2 die Lagen pxA und pyA, die Geschwindigkeiten vxA und vyA sowie die Beschleunigungen axA und ayA auf, wobei all diese Werte durch den Bahnabschnitt B2 bestimmt sind. Die Steuereinrichtung 4 ermittelt eine Bewegungsführung vom Ende E1 des Bahnabschnitts B1 zum Anfang A2 des Bahnabschnitts B2. Diese Bewegungsführung ist die resultierende Bahn, entlang derer die Steuereinrichtung 4 das erste Element 2 relativ zum zweiten Element 3 verfährt. Diese Bewegungsführung wird bezüglich jeder beteiligten Achse mit einem von der Steuereinrichtung 4 ermittelten Geschwindigkeitsverlauf und einem dadurch ebenfalls bestimmten Beschleunigungsverlauf abgefahren.

Die Bewegungsführung ist durch den jeweils korrespondierenden zeitlichen Verlauf der Bewegung der beteiligten Achsen 1 bestimmt. Der jeweilige zeitliche Verlauf der beteiligten Achsen 1 wird nachstehend als Achsenführung bezeichnet. Sofern die Achsenführung vorläufig ist, ist sie nachfolgend mit dem Bezugszeichen AF versehen. Sofern sie endgültig ist, ist sie mit dem Bezugszeichen AF' versehen. Nachstehend wird die Ermittlung der vorläufigen Achsenführung AF für die x-Achse 1 erläutert. Die gleiche Vorgehensweise kann, wie bereits erwähnt, auch für die anderen Achsen 1 erfolgen. Die so ermittelten Achsenführungen AF sind deshalb nur vorläufig, weil die vorläufigen Achsenführungen AF' noch aufeinander abgestimmt werden müssen. Dies wird aus den weiteren Ausführungen ersichtlich werden.

Die Bewegungsführung und damit auch die vorläufigen Achsenführungen AF sind in Geschwindigkeit v, Beschleunigung a und Ruck r begrenzt. Es gelten also für jede Achse 1 die Beziehungen

$$-v\max \leq v \leq v\max \quad, \tag{1}$$

$$-a\max \leq a \leq a\max \tag{2}$$

und

$$-r\max \leq r \leq r\max \quad, \tag{3}$$

wobei vmax, amax und rmax die maximal möglichen Beträge der Geschwindigkeit v, der Beschleunigung a unddes Rucks r der jeweiligen Achse 1 sind.

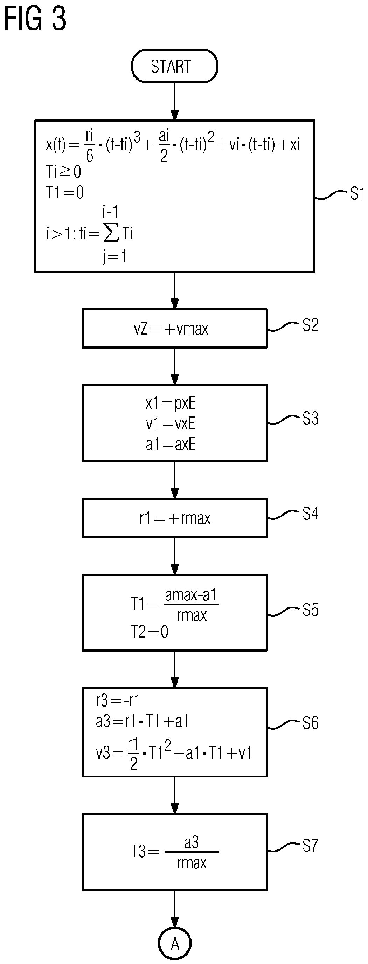

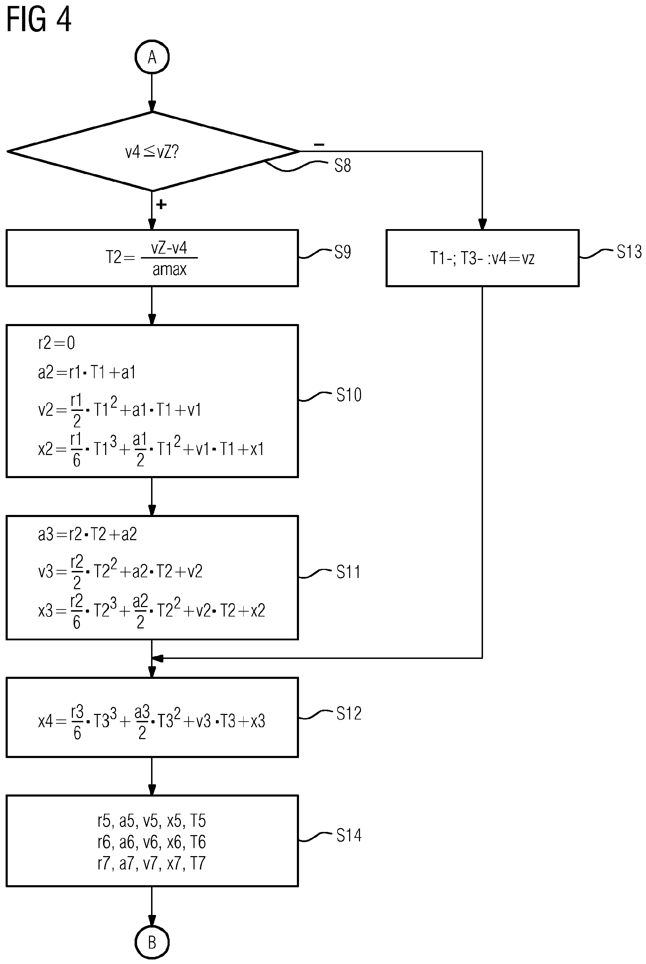

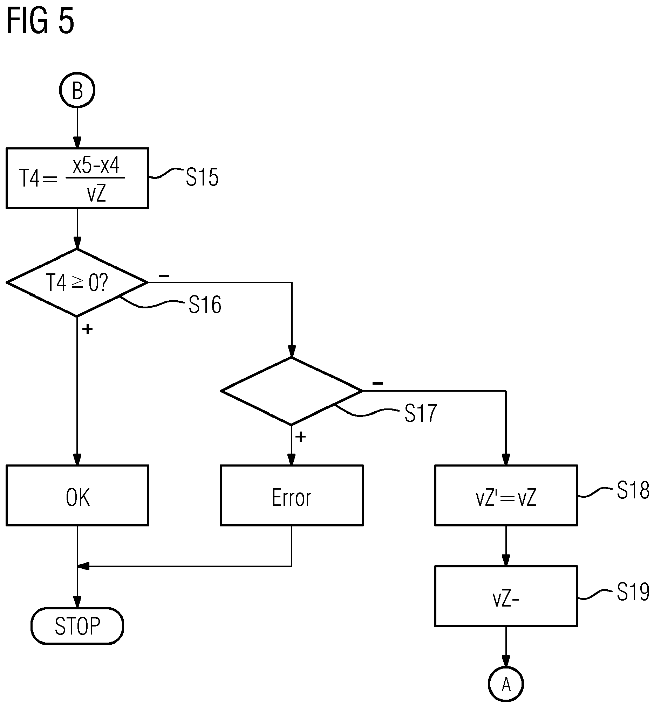

Zum Ermitteln der jeweiligen vorläufigen Achsenführung AF unterteilt die Steuereinrichtung 4 gemäß den FIG 3 bis 5 in einem Schritt S1 die jeweilige vorläufige Achsenführung AF in sieben Phasen i (mit i = 1 ... 7). Die Phasen folgen entsprechend ihrer Nummerierung unmittelbar aufeinander. Jede Phase weist eine Zeitdauer Ti auf. Die Zeitdauern Ti können zwar 0 sein. In diesem Fall entartet die jeweilige Phase, so dass das die jeweils vorhergehende Phase (Phase i-1) und die jeweils nachfolgende Phase (Phase i+1) unmittelbar aneinander angrenzen. Die Zeitdauern Ti können aber nicht kleiner als 0 sein.

Der Ruck r ist in jeder Phase konstant. Der Ort x des ersten Elements 2 relativ zum zweiten Element 3 als Funktion der Zeit t kann also in jeder Phase, d.h. für die Zeitdauer Ti der jeweiligen Phase, durch die Bewegungsgleichung

$$x(t) = \frac{ri}{6} \cdot (t - ti)^3 + \frac{ai}{2} \cdot (t - ti)^2 + vi \cdot (t - ti) + xi \tag{4}$$

beschrieben werden. Hierbei beschreibt ti den Zeitpunkt, zu dem die jeweilige Phase beginnt. ri, ai, vi und xi sind der Ruck r, die Beschleunigung a, die Geschwindigkeit v und der Ort x zu diesem Zeitpunkt ti.

Aus Gleichung 4 können die zugehörigen Gleichungen für die Geschwindigkeit v, die Beschleunigung a und den Ruck r als Funktion der Zeit t abgeleitet werden:

$$v(t) = \frac{ri}{2} \cdot (t - ti)^2 + ai \cdot (t - ti) + vi \quad, \tag{5}$$

$$a(t) = ri \cdot (t - ti) + ai \tag{6}$$

und

$$r(t) = ri \quad . \tag{7}$$

Für Phase 1 kann ohne Beschränkung der Allgemeinheit angenommen werden, dass t1 den Wert 0 aufweist. Für die anderen Phasen gilt in diesem Fall ersichtlich die Beziehung

$$ti = \sum_{j=1}^{i-1} Ti \quad . \tag{8}$$

Der Ruck r in den Phasen 2 und 6 ist 0. Für die Phasen 2 und 6 vereinfachen sich die Gleichungen 4 bis 6 somit zu

$$x(t) = \frac{ai}{2} \cdot (t - ti)^2 + vi \cdot (t - ti) + xi \quad, \tag{9}$$

$$v(t) = ai \cdot (t - ti) + vi \qquad (10)$$

und

$$a(t) = ai \qquad (11)$$

In Phase 4 sind sogar sowohl der Ruck r als auch die Beschleunigung a 0. Für Phase 4 vereinfachen sich die Gleichungen 4 bis 6 somit zu

$$x(t) = vi \cdot (t - ti) + xi \qquad (12)$$

und

$$v(t) = vi \qquad (13)$$

Der Ruck r in den Phasen 1, 3, 5 und 7 ist betragsmäßig stets maximal. Hierbei gilt weiterhin, dass der Ruck r in der dritten Phase invers zum Ruck in der ersten Phase ist und der Ruck in der fünften Phase invers zum Ruck in der siebten Phase ist. Der Ruck r in Phase 1 und der Ruck r in Phase 7 können nach Bedarf positiv oder negativ sein und das gleiche oder voneinander verschiedene Vorzeichen aufweisen.

Die Geschwindigkeit v in der vierten Phase ist eine Zielgeschwindigkeit vZ. Die Steuereinrichtung 4 setzt die Zielgeschwindigkeit vZ in einem Schritt S2 zunächst auf den Wert +vmax. Sodann ermittelt die Steuereinrichtung 4 in einem Schritt S3 mit Ausnahme des Rucks r1 die Parameter für Phase 1. Diese Parameter sind durch die Werte für den Ort x, die Geschwindigkeit v und die Beschleunigung a am Ende E1 des Bahnabschnitts B1 gegeben und sind bereits endgültig:

$$x1 = pxE \qquad (14)$$

$$v1 = vxE \qquad (15)$$

und

$$a1 = axE \qquad (16)$$

In einem Schritt S4 setzt die Steuereinrichtung 4 weiterhin den Ruck r1 für Phase 1 auf den positiven Maximalwert +rmax. In einem Schritt S5 bestimmt die Steuereinrichtung 4 sodann anhand der Beziehung

$$T1 = \frac{a\max - a1}{r\max} \qquad (17)$$

die Zeitdauer T1 für Phase 1. Diese Bestimmung ist nur vorläufig. Somit sind - wenn auch nur vorläufig - alle Parameter der Bewegungsgleichung für Phase 1 und auch deren Zeitdauer T1 bekannt.

Sodann wird vorläufig angenommen, dass die Zeitdauer T2 der Phase 2 0 ist, so dass die Phase 3 direkt an die Phase 1 angrenzt. Aufgrund des Umstands, dass die Parameter und die Zeitdauer T1 für Phase 1 als bekannt angenommen werden, kann die Steuereinrichtung 4 somit in einem Schritt S6 - wenn auch nur vorläufig - auch die Parameter und die Zeitdauer T3 für Phase 3 ermitteln. Insbesondere gilt

$$r3 = -r1 \qquad (18)$$

$$a3 = r1 \cdot T1 + a1 \qquad (19)$$

$$v3 = \frac{r1}{2} \cdot T1^2 + a1 \cdot T1 + v1 \qquad (20)$$

und

$$x3 = \frac{r1}{6} \cdot T1^3 + \frac{a1}{2} \cdot T1^2 + v1 \cdot T1 + x1 \qquad (21)$$

Die Zeitdauer von Phase 3 ergibt sich (vorläufig) zu

$$T3 = \frac{a3}{r \max} \qquad (22)$$

Somit sind - wenn auch nur vorläufig - alle Parameter der Bewegungsgleichung für Phase 3 und auch deren Zeitdauer T3 bekannt. Somit kann die Steuereinrichtung 4 in einem Schritt S7 die Geschwindigkeit v am Ende von Phase 3 ermitteln:

$$v4 = \frac{r3}{2} \cdot T3^2 + a3 \cdot T3 + v3 \qquad (23)$$

Dies ist (vorläufig) die Geschwindigkeit v, mit der - sofern die Berechnung endgültig wäre - in Phase 4 übergegangen würde.

Nun vergleicht die Steuereinrichtung 4 in einem Schritt S8 die Geschwindigkeit v4 mit der Zielgeschwindigkeit vZ. Wenn die Geschwindigkeit v4 kleiner als die Zielgeschwindigkeit vZ ist, bestimmt die Steuereinrichtung 4 in einem Schritt S9 die Zeitdauer T2 der Phase 2 zu

$$T2 = \frac{vZ - v4}{a \max} \qquad (24)$$

Sodann bestimmt die Steuereinrichtung 4 in einem Schritt S10 die Parameter der Bewegungsgleichung für Phase 2. Insbesondere ergeben sich die Parameter zu

$$r2 = 0 \qquad (25)$$

$$a2 = r1 \cdot T1 + a1 \qquad (26)$$

$$v2 = \frac{r1}{2} \cdot T1^2 + a1 \cdot T1 + v1 \qquad (27)$$

und

$$x2 = \frac{r1}{6} \cdot T1^3 + \frac{a1}{2} \cdot T1^2 + v1 \cdot T1 + x1 \qquad (28)$$

Da hiermit alle Parameter einschließlich der Zeitdauer T2 für Phase 2 gegeben sind, kann die Steuereinrichtung 4 in einem Schritt S11 die Parameter für Phase 3 neu bestimmen:

$$a3 = r2 \cdot T2 + a2 \quad,$$

(29)

$$v3 = \frac{r2}{2} \cdot T2^2 + a2 \cdot T2 + v2$$

(30)

und

$$x3 = \frac{r2}{6} \cdot T2^3 + \frac{a2}{2} \cdot T2^2 + v2 \cdot T2 + x2 \quad.$$

(31)

Der Ruck r3 und die Zeitdauer T3 von Phase 3 bleiben unverändert. Die Steuereinrichtung 4 ist somit auch in der Lage, in einem Schritt S12 den Ort x für den Beginn von Phase 4 zu ermitteln:

$$x4 = \frac{r3}{6} \cdot T3^3 + \frac{a3}{2} \cdot T3^2 + v3 \cdot T3 + x3 \quad.$$

(32)

Für die Geschwindigkeit in Phase 4 gilt die Beziehung

$$v4 = vZ \quad.$$

(33)

Wenn die Steuereinrichtung 4 hingegen im Schritt S8 erkennt, dass die im Schritt S7 ermittelte Geschwindigkeit v4 größer als die Zielgeschwindigkeit vZ ist, behält die Steuereinrichtung 4 den Wert 0 für die Zeitdauer T2 von Phase 2 bei. Weiterhin reduziert die Steuereinrichtung 4 in einem Schritt S13 die Zeitdauern T1 und T3 für die Phasen 1 und 3 um gleiche Beträge. Die Steuereinrichtung 4 reduziert die Zeitdauern T1 und T3 so weit, dass bei einer Ermittlung analog zu den Schritten S6 und S7 die nunmehr ermittelte Geschwindigkeit v4 mit der Zielgeschwindigkeit vZ übereinstimmt. Die Steuereinrichtung 4 beachtet bei der Reduzierung der Zeitdauern T1 und T3 die Bedingung, dass die Zeitdauern T1 und T3 nicht negativ werden dürfen. Sodann geht die Steuereinrichtung 4 zum Schritt S12 über.

Durch die Ausführung der Schritte S1 bis S13 hat die Steuereinrichtung 4 somit eine vorläufige Achsenführung AF für die erste, zweite und dritte Phase ermittelt, so dass am Ende der dritten Phase die Beschleunigung a 0 ist und die Geschwindigkeit v gleich der Zielgeschwindigkeit vZ ist. Der am Ende der dritten Phase erreichte Ort x ist ein theoretisch erreichter Ort x4.

In einem Schritt S14 führt die Steuereinrichtung 4 sodann eine analoge Vorgehensweise für die Phasen 5 bis 7 durch. Die Ermittlung ist völlig analog zu den Schritten S1 bis S13. Man kann sich das so vorstellen, dass man den Nullpunkt der Zeit t an das Ende von Phase 7 legt und die Zeit t rückwärts laufen lässt. Die Steuereinrichtung 4 ermittelt somit eine vorläufige Achsenführung AF für die fünfte, sechste und siebte Phase, so dass am Anfang der fünften Phase die Beschleunigung a 0 ist und die Geschwindigkeit v gleich der Zielgeschwindigkeit vZ ist. Der am Anfang der fünften Phase erreichte Ort x ist ein theoretisch erreichter Ort x5.

In einem Schritt S15 ermittelt die Steuereinrichtung 4 gemäß der Beziehung

$$T4 = \frac{x5 - x4}{vZ}$$

(34)

eine theoretische Zeitdauer T4 der Phase 4. In einem Schritt S16 prüft die Steuereinrichtung 4, ob die im Schritt S15 ermittelte Zeitdauer T4 positiv oder zumindest nicht negativ ist. Wenn die Zeitdauer T4 positiv oder nicht negativ ist, ist die Ermittlung der entsprechenden vorläufigen Achsenführung AF abgeschlossen. Aus den bisher vorläufigen Werten sind - soweit es die Ermittlung der entsprechenden vorläufigen Achsenführung AF betrifft - endgültige Werte geworden.

Wenn hingegen die im Schritt S15 ermittelte Zeitdauer T4 negativ ist, prüft die Steuereinrichtung in einem Schritt S17, ob ein Abbruchkriterium erfüllt ist. Wenn das Abbruchkriterium erfüllt ist, ist die Steuereinrichtung 4 nicht in der Lage, für das jeweilige Vorzeichen der Zielgeschwindigkeit vZ eine vorläufige Achsenführung AF zu ermitteln. Das Abbruchkriterium kann beispielsweise erfüllt sein, wenn der Betrag der Zielgeschwindigkeit vZ einen Schwellenwert unterschreitet. Der Schwellenwert kann beispielsweise durch die Geschwindigkeiten vxE, vxA am Ende E1 des Bahnabschnitts B1 und am Anfang A2 des Bahnabschnitts B2 bestimmt sein. Alternativ kann der Schwellenwert den Wert 0 aufweisen. Wenn das Abbruchkriterium nicht erfüllt ist, speichert die Steuereinrichtung 4 in einem Schritt S18 die Zielgeschwindigkeit vZ als alte Zielgeschwindigkeit vZ' ab. Sodann reduziert die Steuereinrichtung 4 in einem Schritt S19 unter Beibehaltung des Vorzeichens den Betrag der Zielgeschwindigkeit vZ und geht zum Schritt S8 zurück. Im Ergebnis ermittelt die Steuereinrichtung 4 somit eine neue Berechnung der vorläufigen Achsenführung AF, allerdings mit dem entsprechend modifizierten Wert der Zielgeschwindigkeit vZ. Diese erneute Berechnung wird weiterhin unter der Randbedingung durchgeführt, dass die Zeitdauer T4 der Phase 4 0 sein muss.

Im Ergebnis ermittelt die Steuereinrichtung 4 durch die Vorgehensweise gemäß den FIG 3 bis 5 somit die Parameter und die Zeitdauern T1 bis T7 für die Phasen 1 bis 7 einer zeitoptimierten Bewegungsführung für die betrachtete Achse 1, also die jeweilige vorläufige Achsenführung AF.

Die Vorgehensweise der FIG 3 bis 5 wurde obenstehend in Verbindung damit erläutert, dass im Schritt S2 die Zielgeschwindigkeit vZ mit positivem Vorzeichen auf den maximal zulässigen Wert vmax gesetzt wird und dass der Ruck r für die Phase 1 im Schritt S4 ebenfalls mit positivem Vorzeichen auf den maximal zulässigen Wert rmax gesetzt wird. Aufgrund der Aussage, dass im Schritt S14 für die Phasen 5 bis 7 die analoge Vorgehensweise wie für die Phasen 1 bis 3 ergriffen wird, wird gemäß der bisher erläuterten Vorgehensweise weiterhin auch der Ruck r für die Phase 7 mit positivem Vorzeichen auf den maximal zulässigen Wert rmax gesetzt. Die Vorgehensweise der FIG 3 bis 5 wird jedoch auch mit anderen Kombinationen der Vorzeichen für die Zielgeschwindigkeit vZ sowie den Ruck r in Phase 1 und den Ruck r in Phase 7 durchgeführt. Zumindest wird die Vorgehensweise in der Kombination wiederholt, dass die Zielgeschwindigkeit vZ mit negativem Vorzeichen auf den maximal zulässigen Betrag vmax gesetzt wird und dass der Ruck r für die Phase 1 im Schritt S4 ebenfalls mit negativen Vorzeichen auf den maximal zulässigen Betrag rmax gesetzt wird und auch der Ruck r für die Phase 7 mit negativem Vorzeichen auf den maximal zulässigen Betrag rmax gesetzt wird. Je nach Lage des Einzelfalls kann es erforderlich sein, alle acht Kombinationen (Geschwindigkeit vZ positiv oder negativ - Ruck r in Phase 1 positiv oder negativ - Ruck r in Phase 7 positiv oder negativ) zu betrachten. Im Regelfall wird es zwar für einige der betrachteten Kombinationen nicht möglich sein, eine Achsenführung AF zu ermitteln. Bei mindestens einer der betrachteten Kombinationen ist diese Möglichkeit jedoch gegeben. Weiterhin muss, sofern in Phase 1 der Ruck r mit negativen Vorzeichen auf den maximal zulässigen Betrag rmax gesetzt wird, Gleichung 17 dahingehend modifiziert werden, dass die maximal möglichen Beträge amax und rmax für die Beschleunigung a und den Ruck r mit einem negativen Vorzeichen versehen werden. Gleichung 17 ändert sich dadurch zu

$$T1 = \frac{a\max + a1}{r\max} \qquad (35)$$

Ergeben sich mehrere mögliche Achsenführungen AF, so ermittelt die Steuereinrichtung 4 für alle möglichen Achsenführungen AF gemäß der Beziehung

$$TA = \sum_{i=1}^{7} Ti \qquad (36)$$

die jeweilige Achsenzeit TA. Sie selektiert sodann diejenige mögliche Achsenführung AF mit der kleinsten Achsenzeit TA als vorläufige Achsenführung AF für diese Achse 1. Ergibt sich nur eine einzige mögliche Achsenführung AF, wird für diese Achse 1 selbstverständlich diese mögliche Achsenführung AF übernommen. Die zugehörige Achsenzeit TA ergibt sich wie zuvor gemäß Gleichung 35. Die ermittelte vorläufige Achsenführung AF ist - für die jeweilige Achse 1 - zeitoptimal, in Geschwindigkeit v und Beschleunigung a stetig sowie in Geschwindigkeit v, Beschleunigung a und Ruck r begrenzt. Sie ist weiterhin auch im Ort x stetig. Dies ergibt sich aus der - selbstverständlichen - Bedingung, dass die Bewegungsführung vom Ende E1 des Bahnabschnitts B1 zum Anfang A2 des Bahnabschnitts B2 ermittelt wird.

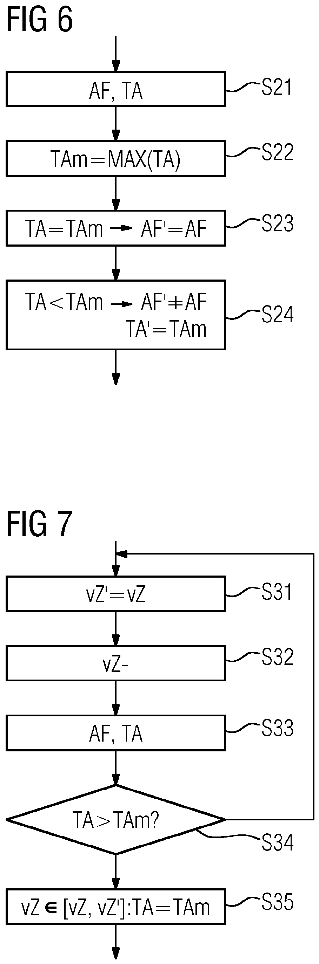

Die obenstehend in Verbindung mit den FIG 3 bis 5 erläuterte Vorgehensweise, also die Ermittlung und gegebenenfalls Selektion der vorläufigen Achsenführung AF, führt die Steuereinrichtung 4 gemäß FIG 6 in einem Schritt S21 für jede Achse 1 aus, und zwar unabhängig von den anderen Achsen 1. Sie ermittelt dadurch für alle Achsen 1 eine (1) jeweilige vorläufige Achsenführung AF und die jeweilige zugehörige Achsenzeit TA. Die vorläufigen Achsenführungen AF sind jedoch noch nicht aufeinander abgestimmt. Um diese Abstimmung vorzunehmen, bestimmt die Steuereinrichtung 4 in einem Schritt S22 das Maximum TAm der Achsenzeiten TA der Achsen 1. Weiterhin übernimmt die Steuereinrichtung 4 in einem Schritt S23 für diejenigen Achsen 1, deren Achsenzeit TA mit dem Maximum TAm der Achsenzeiten TA übereinstimmt, die jeweilige ermittelte vorläufige Achsenführung AF unverändert als endgültige Achsenführung AF'. Aufgrund der unveränderten Übernahme ist die endgültige Achsenzeit TA' für diese Achsen 1 unverändert gleich dem Maximum TAm.

Für die Achsen 1, deren Achsenzeit TA kleiner als das Maximum TAm der Achsenzeiten TA ist, modifiziert die Steuereinrichtung 4 in einem Schritt S24 die zuvor ermittelte jeweilige vorläufige Achsenführung AF. Die Modifikation wird später in Verbindung mit FIG 7 noch erläutert werden. Die Modifikation ist derart, dass nach Abschluss der Modifikation die modifizierte Achsenzeit TA' gleich dem Maximum TAm ist, die Stetigkeit in Ort x, Geschwindigkeit v und Beschleunigung a jedoch erhalten bleibt.

Zur entsprechenden Modifizierung des Schrittes S24 speichert die Steuereinrichtung 4 vorzugsweise zunächst in einem Schritt S31 für die jeweilige Achse 1 gemäß FIG 7 die ermittelte Zielgeschwindigkeit vZ der betrachteten Achse 1 als alte Zielgeschwindigkeit vZ' ab. Sodann reduziert die Steuereinrichtung 4 in einem Schritt S32 für die betrachtete Achse 1 den Betrag der zuvor ermittelten Zielgeschwindigkeit vZ. Mit dieser betragsmäßig reduzierten Zielgeschwindigkeit vZ ermittelt die Steuereinrichtung 4 in einem Schritt S33 erneut die entsprechende Achsenführung AF und die zugehörige Achsenzeit TA. Die Implementierung des Schrittes S33 korrespondiert im Wesentlichen mit der Vorgehensweise der FIG 3 bis 5 mit Ausnahme des Umstands, dass die Zielgeschwindigkeit vZ bereits vorgegeben ist, so dass der Schritt S2 entfallen kann. In einem Schritt S34 prüft die Steuereinrichtung 4, ob die im Schritt S33 ermittelte modifizierte Achsenzeit TA größer als das Maximum TAm ist. Wenn dies nicht der Fall ist, geht die Steuereinrichtung 4 wieder zum Schritt S31 zurück. Dadurch wird im Ergebnis die Zielgeschwindigkeit vZ betragsmäßig immer weiter verringert, bis die im Schritt S33 ermittelte modifizierte Achsenzeit TA größer als das Maximum TAm ist.

Sobald die im Schritt S33 ermittelte modifizierte Achsenzeit TA größer als das Maximum TAm ist, sind der Steuereinrichtung 4 zwei Zielgeschwindigkeiten bekannt, nämlich die Zielgeschwindigkeiten vZ und vZ', wobei eine der zugehörigen Achsenzeiten TA größer und die andere Achsenzeit TA kleiner als das Maximum TAm ist. Die Steuereinrichtung 4 kann daher in einem Schritt S35 ohne weiteres eine endgültige Zielgeschwindigkeit vZ ermitteln, bei welcher die zugehörige Achsenzeit TA gleich dem Maximum TAm ist. Beispielsweise kann die Steuereinrichtung 4 iterativ jeweils eine Zielgeschwindigkeit vZ zwischen den beiden zuletzt gültigen Zielgeschwindigkeiten vZ, vZ' bestimmen und für diese Zielgeschwindigkeit vZ erneut die Achsenzeit TA ermitteln, bis die sich ergebende Achsenzeit TA gleich dem Maximum TAm ist. Die Bestimmung des Schrittes S35 kann beispielsweise durch Intervallteilung oder gemäß dem Sekantenverfahren erfolgen. Auch andere Vorgehensweise sind möglich. Im Rahmen von Schritt S35 erfolgt auch zugleich die erneute Ermittlung der entsprechenden vorläufigen Achsenführung AF. Dies ist erforderlich, weil ohne Ermittlung der vorläufigen Achsenführung AF die Achsenzeit TA nicht ermittelt werden kann.

Im Ergebnis ist die Steuereinrichtung 4 somit in der Lage, eine Bewegungsführung - nämlich die Gesamtheit der endgültigen Achsenführungen AF' - vom Ende E1 bis E3 eines jeweiligen Bahnabschnitts B1 bis B3 zum Anfang A1 bis A3 des jeweils unmittelbar nachfolgenden Bahnabschnitts B1 bis B3 zu ermitteln, so dass die Bewegung des ersten Elements 2 der Maschine relativ zu dem zweiten Element 3 der Maschine am Ende E1 bis E3 des jeweiligen Bahnabschnitts B1 bis B3 stetig in Ort pxE, pyE, Geschwindigkeit vxE, vyE und Beschleunigung axE, ayE in die ermittelte Bewegungsführung übergeht und weiterhin auch die Bewegungsführung am Anfang A1 bis A3 des jeweils unmittelbar nachfolgenden Bahnabschnitts B1 bis B3 stetig in Ort pxA, pyA, Geschwindigkeit vxA, vyA und Beschleunigung axA, ayA in den jeweils unmittelbar nachfolgenden Bahnabschnitt B1 bis B3 übergeht. Entsprechend dieser Bewegungsführung steuert die Steuereinrichtung 4 die Achsen 1 an, um das erste Element 2 der Maschine relativ zum zweiten Element 3 der Maschine vom Ende E1 bis E3 eines jeweiligen Bahnabschnitts B1 bis B3 zum Anfang A1 bis A3 des jeweils unmittelbar nachfolgenden Bahnabschnitts B1 bis B3 zu führen.

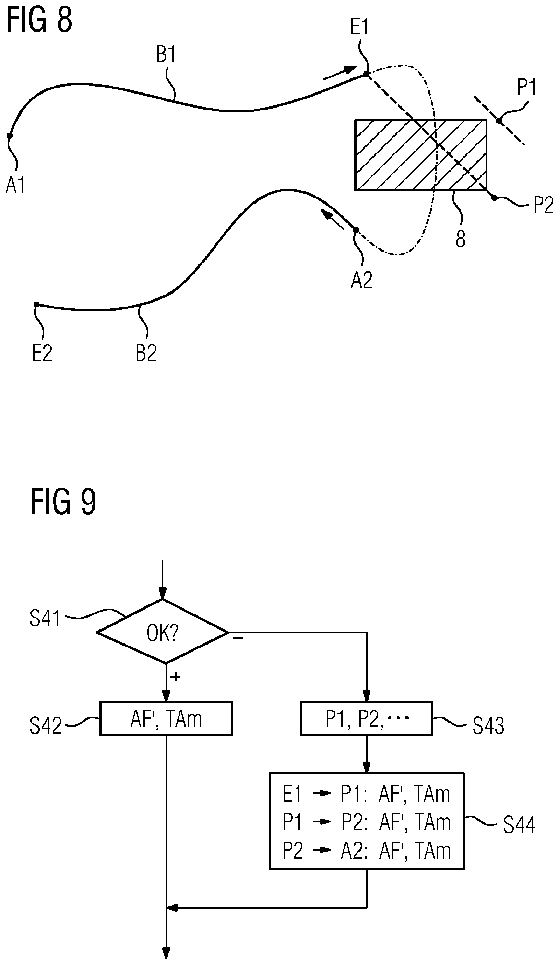

Bisher wurde eine Vorgehensweise erläutert, bei welcher eine Bewegungsführung vom Ende E1 eines jeweiligen Bahnabschnitts B1 direkt zum Anfang A2 des jeweils nachfolgenden Bahnabschnitts B2 ermittelt wurde. FIG 8 zeigt eine derartige Bewegungsführung. In vielen Fällen kann diese Bewegungsführung problemlos verwendet werden. Oftmals ist der Steuereinrichtung 4 jedoch in dem durch die möglichen Bewegungsbereiche der Achsen 1 aufgespannten Raum ein zulässiger Bereich bekannt, innerhalb dessen die von ihr ermittelte Bewegungsführung erfolgen muss. Anders ausgedrückt: Es gibt - siehe FIG 8 - umgekehrt einen verbotenen Bereich 8, in dem die Bewegungsführung nicht erfolgen darf. Es ist möglich, dass der Steuereinrichtung 4 der zulässige Bereich als solcher direkt vorgegeben ist. Alternativ ist es möglich, dass der Steuereinrichtung 4 umgekehrt der verbotene Bereich 8 vorgegeben ist, so dass die Steuereinrichtung 4 indirekt den zulässigen Bereich ermitteln kann. Um auch in einem derartigen Fall eine ordnungsgemäße Bewegungsführung ermitteln zu können, geht die Steuereinrichtung 4 so vor, wie dies nachstehend in Verbindung mit FIG 9 erläutert wird.

Gemäß FIG 9 prüft die Steuereinrichtung 4 in einem Schritt S41, ob eine Bewegungsführung, die ausschließlich auf dem Ende E1 eines jeweiligen Bahnabschnitts B1 und dem Anfang A2 des jeweils unmittelbar nachfolgenden Bahnabschnitts B2 basiert, innerhalb des zulässigen Bereichs erfolgen würde. Wenn dies der Fall ist, ermittelt die Steuereinrichtung 4 in einem Schritt S42 - so wie in Verbindung mit den FIG 1 bis 7 erläutert - die Bewegungsführung des ersten Elements 2 relativ zum zweiten Element 3. Es ist jedoch auch möglich, dass die Steuereinrichtung 4 im Schritt S41 feststellt, dass die von ihr ermittelte Bewegungsführung in den verbotenen Bereich 8 eintreten würde. Ein Beispiel einer derartigen verbotenen Bewegungsführung ist in FIG 8 strichpunktiert eingezeichnet. Falls die ermittelte Bewegungsführung in den verbotenen Bereich eindringt, unterteilt die Steuereinrichtung 4 die Bewegungsführung in einem Schritt S43 in mehrere unmittelbar aufeinanderfolgende Teilbewegungen. Insbesondere legt die Steuereinrichtung 4 im Schritt S43 Zwischenpunkte P1, P2 usw. fest, die im Verlauf der noch zu ermittelnden Bewegungsführung angefahren werden müssen. Die Steuereinrichtung 4 unterteilt dadurch die Bewegungsführung in mehrere Teilbewegungen. Die Teilbewegungen folgen unmittelbar aufeinander, beispielsweise vom Ende E1 des einen Bahnabschnitts B1 zum ersten Zwischenpunkt P1, von dort zum zweiten Zwischenpunkt P2 und von dort zum Anfang A2 des nachfolgenden Bahnabschnitts B2. Die entsprechende Ermittlung der Zwischenpunkte P1, P2 usw. ist Fachleuten allgemein bekannt. Sie wird insbesondere zur Kollisionsvermeidung verwendet.

Falls die Steuereinrichtung 4 derartige Zwischenpunkte P1, P2 usw. bestimmt, führt die Steuereinrichtung 4 die obenstehend erläuterte Vorgehensweise bezüglich der jeweiligen Teilbewegung aus. Sie ermittelt also in einem Schritt S44 gemäß der obenstehend erläuterten Vorgehensweise jeweils eine Bewegungsführung für die jeweilige Teilbewegung vom Ende E1 des einen Bahnabschnitts B1 zum ersten Zwischenpunkt P1, eine Bewegungsführung für die Teilbewegung vom ersten Zwischenpunkt P1 zum zweiten Zwischenpunkt P2 und eine Bewegungsführung für die Teilbewegung vom zweiten Zwischenpunkt P2 zum Anfang A2 des nachfolgenden Bahnabschnitts B2. Die Ermittlung erfolgt jeweils so, als ob die Teilbewegungen jeweils eine eigene Bewegungsführung wären. Die Teilbewegungen sind aufgrund der Art und Weise der Ermittlung (so wie vorstehend erläutert) jeweils in sich stetig in Ort x, Geschwindigkeit v und Beschleunigung a und begrenzt in Geschwindigkeit v, Beschleunigung a und Ruck r. Weiterhin geht der eine Bahnabschnitt B1 stetig in Ort x, Geschwindigkeit v und Beschleunigung a in die zuerst ausgeführte Teilbewegung über und geht die zuletzt ausgeführte Teilbewegung stetig in Ort x, Geschwindigkeit v und Beschleunigung a in den jeweils nachfolgenden Bahnabschnitt B2 über. Auch die Übergänge von einer Teilbewegung zur nachfolgenden Teilbewegungen sind stetig in Geschwindigkeit v und Beschleunigung a.

Um das Potenzial der vorliegenden Erfindung in vollem Umfang nutzen zu können, sollte nach Möglichkeit für die Zwischenpunkte P1, P2 usw. nicht nur der jeweilige Ort x definiert sein. Zusätzlich sollte zumindest auch die jeweilige Geschwindigkeit v und/oder Beschleunigung a mindestens einer der Achsen 1 einen von 0 verschiedenen Wert aufweisen.

Eine mögliche Vorgehensweise besteht darin, für die Zwischenpunkte P1, P2 usw. jeweils eine direkte Verbindung der beiden Enden der beiden angrenzenden Teilbewegungen zu ermitteln. Dies ist in FIG 8 für den Zwischenpunkt P1 gestrichelt angedeutet. Der zugehörige Vektor kann zur Definition der Richtung der Geschwindigkeit am Zwischenpunkt P1 herangezogen werden. Insbesondere kann die Richtung der Geschwindigkeit am Zwischenpunkt P1 parallel zu diesem Vektor verlaufen. Der Geschwindigkeitsvektor wird sodann derart skaliert, dass für mindestens eine Achse 1 die Geschwindigkeit v betragsmäßig ihren maximal möglichen Wert vmax erreicht und für die anderen Achsen 1 die Geschwindigkeit v betragsmäßig unter ihrem jeweils maximal möglichen Wert vmax liegt. Alternativ ist es möglich, alle Geschwindigkeitskomponenten betragsmäßig auf ihren jeweils maximal möglichen Wert vmax zu setzen und nur das Vorzeichen anhand des durch die direkte Verbindung der beiden Enden der beiden angrenzenden Teilbewegungen definierten Vektor festzulegen. Es sind aber auch andere Vorgehensweisen denkbar.

Zusammengefasst betrifft die vorliegende Erfindung somit folgenden Sachverhalt:
Eine Maschine weist eine Anzahl von lagegeregelten Achsen 1 auf, die in ihrer Gesamtheit eine Verfahrbewegung zweier Elemente 2, 3 der Maschine relativ zueinander bewirken. Die Steuereinrichtung 4 steuert die Achsen 1 der Maschine derart an, dass die Elemente 2, 3 relativ zueinander sequenziell nacheinander Bahnabschnitte B1 bis B3 mit für die Bahnabschnitte B1 bis B3 definierten Geschwindigkeitsverläufen und dadurch definierten Beschleunigungsverläufen abfährt. Die Bahnabschnitte B1 bis B3 weisen jeweils einen Anfang A1 bis A3 und ein Ende E1 bis E3 auf, wobei das Ende E1 und der Anfang A2 unmittelbar nachfolgender Bahnabschnitte B1, B2 sich in der Lage mindestens einer Achse 1 unterscheiden. Die Steuereinrichtung 4 ermittelt für die Achsen 1 eine zeitoptimale, in Ort x, Geschwindigkeit v und Beschleunigung a stetige und in Geschwindigkeit v, Beschleunigung a und Ruck r begrenzte Bewegungsführung vom Ende E1 des einen zum Anfang A2 des nachfolgenden Bahnabschnitts B1, B2. Die Ermittlung erfolgt derart, dass die Bewegung der Elemente 2, 3 relativ zueinander am Ende E1 des einen Bahnabschnitts B1 stetig in Ort x, Geschwindigkeit v und Beschleunigung a in die ermittelte Bewegungsführung übergeht und die Bewegungsführung am Anfang A2 des anderen Bahnabschnitts B2 stetig in Ort x, Geschwindigkeit v und Beschleunigung a in den anderen Bahnabschnitt B2 übergeht.

Die vorliegende Erfindung weist viele Vorteile auf. Insbesondere kann die Zeitdauer, die für unproduktive Wegabschnitte benötigt wird, minimiert werden, so dass die Gesamt-Bearbeitungszeit reduziert und dadurch die Effizienz gesteigert werden kann. Dies gilt gleichermaßen für alle Arten von unproduktiven Wegabschnitten. Die Berücksichtigung eines zulässigen Bereichs (bzw. umgekehrt eines verbotenen Bereichs 8) ist ohne weiteres möglich. Das erfindungsgemäße Verfahren ist so schnell, dass es online und in Echtzeit auf der Steuereinrichtung 4 ausgeführt werden kann. Der Steuereinrichtung 4 sind weiterhin auch die Dynamikbegrenzungen der Maschine bekannt, also die maximal möglichen Beträge vmax, amax, rmax für Geschwindigkeiten v, Beschleunigungen a und Rucke r der einzelnen Achsen 1. Das Steuerprogramm 5, welches das erfindungsgemäße Betriebsverfahren realisiert, kann ohne weiteres bei einer bestehenden Steuereinrichtung 4 nachgerüstet werden. Ein Austausch einer bestehenden Steuereinrichtung 4 ist nicht erforderlich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Betriebsverfahren für eine Maschine, die eine Anzahl von lagegeregelten Achsen (1) aufweist, die in ihrer Gesamtheit eine Verfahrbewegung eines ersten Elements (2) der Maschine relativ zu einem zweiten Element (3) der Maschine bewirken,

   - wobei die Steuereinrichtung (4) die Achsen (1) der Maschine derart ansteuert, dass das erste Element (2) der Maschine relativ zu dem zweiten Element (3) der Maschine sequenziell nacheinander mehrere vorbestimmte Bahnabschnitte (B1 bis B3) mit einem für den jeweiligen Bahnabschnitt (B1 bis B3) definierten jeweiligen Geschwindigkeitsverlauf und einem für den jeweiligen Bahnabschnitt (B1 bis B3) durch den jeweiligen Geschwindigkeitsverlauf definierten jeweiligen Beschleunigungsverlauf abfährt,
   - wobei die Bahnabschnitte (B1 bis B3) jeweils einen Anfang (A1 bis A3) und ein Ende (E1 bis E3) aufweisen und das Ende (E1) eines jeweiligen Bahnabschnitts (B1) und der Anfang (A2) des jeweils unmittelbar nachfolgenden Bahnabschnitts (B2) sich in der Lage mindestens einer der lagegeregelten Achsen (1) unterscheiden,

   **dadurch gekennzeichnet,**
   **dass** die Steuereinrichtung (4) für die Achsen (1) eine zeitoptimale, in Ort (x), Geschwindigkeit (v) und Beschleunigung (a) stetige und in Geschwindigkeit (v), Beschleunigung (a) und Ruck (r) begrenzte Bewegungsführung vom Ende (E1) eines jeweiligen Bahnabschnitts (B1) zum Anfang (A2) des jeweils unmittelbar nachfolgenden Bahnabschnitts (B2) ermittelt, so dass die Bewegung des ersten Elements (2) der Maschine relativ zu dem zweiten Element (3) der Maschine am Ende (E1) des jeweiligen Bahnabschnitts (B1) stetig in Ort (x), Geschwindigkeit (v) und Beschleunigung (a) in die ermittelte Bewegungsführung übergeht und die Bewegungsführung am Anfang (A2) des jeweils unmittelbar nachfolgenden Bahnabschnitts (B2) stetig in Ort (x), Geschwindigkeit (v) und Beschleunigung (a) in den jeweils unmittelbar nachfolgenden Bahnabschnitt (B2) übergeht.

2. Betriebsverfahren nach Anspruch 1,
   **dadurch gekennzeichnet,**
   **dass** die Steuereinrichtung (4) zum Ermitteln der Bewegungsführung

   - zunächst für die Achsen (1) unabhängig voneinander eine jeweilige zeitoptimale, in Ort (x), Geschwindigkeit (v) und Beschleunigung (a) stetige und in Geschwindigkeit (v), Beschleunigung (a) und Ruck (r) begrenzte vorläufige Achsenführung (AF) vom Ende (E1) eines jeweiligen Bahnabschnitts (B1) zum Anfang (A2) des jeweils unmittelbar nachfolgenden Bahnabschnitts (B2) ermittelt, so dass - bezogen auf die jeweils betrachtete Achse (1) - die Bewegung des ersten Elements (2) der Maschine relativ zu dem zweiten Element (3) der Maschine am Ende (E1) des jeweiligen Bahnabschnitts (B1) stetig in Ort (x), Geschwindigkeit (v) und Beschleunigung (a) in die ermittelte vorläufige Achsenführung (AF) übergeht und die vorläufige Achsenführung (AF) am Anfang (A2) des jeweils unmittelbar nachfolgenden Bahnabschnitts (B2) stetig in Ort (x), Geschwindigkeit (v) und Beschleunigung (a) in den jeweils unmittelbar nachfolgenden Bahnabschnitt (B2) übergeht,
   - für die Achsen (1) die für die jeweilige Achsenführung (AF) benötigte Achsenzeit (TA) ermittelt,
   - die vorläufige Achsenführung (AF) mit der größten benötigten Achsenzeit (TAm) für diese Achse (1) unverändert als endgültige Achsenführung (AF') übernimmt,
   - für die Achsen (1) mit einer kleineren als der größten benötigten Achsenzeit (TAm) die jeweilige vorläufige Achsenführung (AF) modifiziert, so dass die Stetigkeit in Ort (x), Geschwindigkeit (v) und Beschleunigung (a) erhalten bleibt und die zugehörige Achsenzeit (TA) mit der größten benötigten Achsenzeit (TAm) übereinstimmt, und die so ermittelten modifizierten Achsenführungen (AF) als endgültige Achsenführungen (AF') übernimmt.

3. Betriebsverfahren nach Anspruch 2,
   **dadurch gekennzeichnet,**
   **dass** die Steuereinrichtung (4) zum Modifizieren der jeweiligen vorläufigen Achsenführung (AF) den Betrag der Zielgeschwindigkeit (vZ) reduziert und basierend auf der betragsmäßig entsprechend reduzierten Zielgeschwindigkeit (vZ) erneut die jeweilige vorläufige Achsenführung (AF) und die zugehörige Achsenzeit (TA) ermittelt, bis die zugehörige Achsenzeit (TA) mit der größten benötigten Achsenzeit (TAm) übereinstimmt.

4. Betriebsverfahren nach Anspruch 2 oder 3,
**dadurch gekennzeichnet,**

- **dass** die Steuereinrichtung (4) zum Ermitteln der jeweiligen vorläufigen Achsenführung (AF) die jeweilige vorläufige Achsenführung (AF) in sieben unmittelbar aufeinanderfolgende Phasen unterteilt, wobei

-- jede der aufeinanderfolgenden Phasen eine jeweilige zumindest nicht negative Zeitdauer (T1 bis T7) aufweist,
-- in der ersten Phase und in der siebten Phase der Ruck (r) positiv oder negativ, betragsmäßig aber maximal ist,
-- in der dritten Phase der Ruck (r) invers zum Ruck (r) in der ersten Phase ist und in der fünften Phase der Ruck (r) invers zum Ruck (r) in der siebten Phase ist,
-- in der zweiten und sechsten Phase der Ruck (r) 0 ist,
-- in der vierten Phase der Ruck (r) und die Beschleunigung (a) 0 sind und
-- die Geschwindigkeit (v) in der vierten Phase die Zielgeschwindigkeit (vZ) ist,

- **dass** die Steuereinrichtung (4) die Zielgeschwindigkeit (vZ) nacheinander zunächst mit positiven und negativen Vorzeichen auf den maximal zulässigen Wert (vmax) setzt,
- **dass** die Steuereinrichtung (4) für den jeweiligen Wert der Zielgeschwindigkeit (vZ)

-- die zugehörigen Abschnitte der jeweiligen vorläufigen Achsenführung (AF) für die erste, zweite und dritte Phase ermittelt, so dass am Ende der dritten Phase die Beschleunigung (a) 0 ist und die Geschwindigkeit (v) gleich der jeweiligen Zielgeschwindigkeit (vZ) ist,
-- die zugehörigen Abschnitte der jeweiligen vorläufigen Achsenführung (AF) für die fünfte, sechste und siebte Phase ermittelt, so dass am Anfang der fünften Phase die Beschleunigung (a) 0 ist und die Geschwindigkeit (v) gleich der jeweiligen Zielgeschwindigkeit (vZ) ist,
-- prüft, ob angesichts der ermittelten ersten bis dritten Phase und der ermittelten fünften bis siebten Phase eine theoretische Zeitdauer (T4) der vierten Phase größer als 0 ist oder gleich 0 ist,
-- bejahendenfalls die Abschnitte der jeweiligen vorläufigen Achsenführung (AF) für die erste bis dritte und fünfte bis siebte Phase übernimmt und für die vierte Phase die ermittelte theoretische Zeitdauer (T4) als Zeitdauer (T4) übernimmt,
-- verneinendenfalls die Zeitdauer (T4) der vierten Phase auf 0 setzt, so dass im Ergebnis die dritte Phase und die fünfte Phase unmittelbar aneinander angrenzen, und weiterhin den Betrag der Zielgeschwindigkeit (vZ) reduziert und die Ermittlung der jeweiligen vorläufigen Achsenführung (AF) für erste, zweite und dritte Phase sowie für die fünfte, sechste und siebte Phase mit dem entsprechend modifizierten Wert der Zielgeschwindigkeit (vZ) wiederholt, bis entweder die dritte und die fünfte Phase stetig in Ort (x), Geschwindigkeit (v) und Beschleunigung (a) ineinander übergehen oder die Steuereinrichtung (4) feststellt, dass für das jeweilige Vorzeichen der Zielgeschwindigkeit (vZ) eine vorläufige Achsenführung (AF) nicht ermittelbar ist.

5. Betriebsverfahren nach einem der obigen Ansprüche,
**dadurch gekennzeichnet,**

- **dass** der Steuereinrichtung (4) in dem durch die möglichen Bewegungsbereiche der Achsen (1) aufgespannten Raum ein zulässiger Bereich bekannt ist, innerhalb dessen die von ihr ermittelte Bewegungsführung erfolgen muss,
- **dass** die Steuereinrichtung (4) prüft, ob eine ausschließlich auf dem Ende (E1) eines jeweiligen Bahnabschnitts (B1) und dem Anfang (A2) des jeweils unmittelbar nachfolgenden Bahnabschnitts (B2) basierende Bewegungsführung innerhalb des zulässigen Bereichs erfolgen würde,
- **dass** die Steuereinrichtung (4) bejahendenfalls die Bewegungsführung entsprechend einem der Ansprüche 1 bis 4 ermittelt und
- **dass** die Steuereinrichtung (4) verneinendenfalls die Bewegungsführung durch Festlegung von anzufahrenden Zwischenpunkten (P1, P2) in mehrere unmittelbar aufeinanderfolgende, in Ort (x), Geschwindigkeit (v) und Beschleunigung (a) stetige sowie Geschwindigkeit (v), Beschleunigung (a) und Ruck (r) begrenzte Teilbewegungen unterteilt und
- **dass** die Steuereinrichtung (4) die Teilbewegungen so wie eine jeweilige Bewegungsführung im Sinne der Ansprüche 1 bis 4 vom Anfang des jeweiligen Teilbereichs zum Ende des jeweiligen Teilbereichs ermittelt.

6. Betriebsverfahren nach Anspruch 5,

**dadurch gekennzeichnet,**

**dass** bei mindestens einer der Teilbewegungen mindestens eine der Achsen (1) sowohl am Anfang als auch am Ende dieser Teilbewegung eine von 0 verschiedene Geschwindigkeit (v) und/oder eine von 0 verschiedene Beschleunigung (a) aufweist.

7. Betriebsverfahren nach einem der obigen Ansprüche,
**dadurch gekennzeichnet,**
**dass** die Anfänge (A1 bis A3) und die Enden (E1 bis E3) der Bahnabschnitte (B1 bis B3) der Steuereinrichtung (4) als solche vorgegeben sind und/oder dass die Steuereinrichtung (4) die Anfänge (A1 bis A3) und/oder die Enden (E1 bis E3) der Bahnabschnitte (B1 bis B3) selbsttätig ermittelt.

8. Betriebsverfahren nach einem der obigen Ansprüche,
**dadurch gekennzeichnet,**
**dass** die Steuereinrichtung (4) das Betriebsverfahren online ausführt.

9. Steuerprogramm für eine Steuereinrichtung (4), wobei das Steuerprogramm Maschinencode (6) aufweist, der von der Steuereinrichtung (4) abarbeitbar ist, wobei die Abarbeitung des Maschinencodes (6) durch die Steuereinrichtung (4) bewirkt, dass die Steuereinrichtung (4) eine Maschine, die eine Anzahl von lagegeregelten Achsen (1) aufweist, die in ihrer Gesamtheit eine Verfahrbewegung eines ersten Elements (2) der Maschine relativ zu einem zweiten Element (3) der Maschine bewirken, gemäß einem Betriebsverfahren nach einem der Ansprüche 1 bis 8 steuert.

10. Steuereinrichtung für eine Maschine, die eine Anzahl von lagegeregelten Achsen (1) aufweist, die in ihrer Gesamtheit eine Verfahrbewegung eines ersten Elements (2) der Maschine relativ zu einem zweiten Element (3) der Maschine bewirken, wobei die Steuereinrichtung mit einem Steuerprogramm (5) nach Anspruch 9 programmiert ist, so dass die Steuereinrichtung die Maschine gemäß einem Betriebsverfahren nach einem der Ansprüche 1 bis 8 steuert.

11. Maschine, die eine Anzahl von lagegeregelten Achsen (1) aufweist, die in ihrer Gesamtheit eine Verfahrbewegung eines ersten Elements (2) der Maschine relativ zu einem zweiten Element (3) der Maschine bewirken, wobei die Maschine eine Steuereinrichtung (4) nach Anspruch 10 aufweist, welche die Achsen (1) der Maschine gemäß einem Betriebsverfahren nach einem der Ansprüche 1 bis 8 steuert.

## FIG 1

## FIG 2

E1(pxE, pyE)

B1

(vxE, vyE, axE, ayE)

A1

(vxA, vyA, axA, ayA)

A2(pxA, pyA)

B2

E2

A3

E3

B3

# FIG 3

START

$$x(t) = \frac{ri}{6} \cdot (t\text{-}ti)^3 + \frac{ai}{2} \cdot (t\text{-}ti)^2 + vi \cdot (t\text{-}ti) + xi$$

$Ti \geq 0$

$T1 = 0$

$$i > 1 : ti = \sum_{j=1}^{i-1} Ti$$

S1

$vZ = +vmax$ — S2

$x1 = pxE$
$v1 = vxE$
$a1 = axE$ — S3

$r1 = +rmax$ — S4

$$T1 = \frac{amax\text{-}a1}{rmax}$$
$T2 = 0$ — S5

$r3 = \text{-}r1$
$a3 = r1 \cdot T1 + a1$
$$v3 = \frac{r1}{2} \cdot T1^2 + a1 \cdot T1 + v1$$ — S6

$$T3 = \frac{a3}{rmax}$$ — S7

A

# FIG 4

A

$v4 \leq vZ$? — S8

**+**

$$T2 = \frac{vZ-v4}{amax}$$ — S9

S13: $T1-; T3- : v4 = vz$

S10:

$r2 = 0$

$a2 = r1 \cdot T1 + a1$

$$v2 = \frac{r1}{2} \cdot T1^2 + a1 \cdot T1 + v1$$

$$x2 = \frac{r1}{6} \cdot T1^3 + \frac{a1}{2} \cdot T1^2 + v1 \cdot T1 + x1$$

S11:

$a3 = r2 \cdot T2 + a2$

$$v3 = \frac{r2}{2} \cdot T2^2 + a2 \cdot T2 + v2$$

$$x3 = \frac{r2}{6} \cdot T2^3 + \frac{a2}{2} \cdot T2^2 + v2 \cdot T2 + x2$$

S12:

$$x4 = \frac{r3}{6} \cdot T3^3 + \frac{a3}{2} \cdot T3^2 + v3 \cdot T3 + x3$$

S14:

r5, a5, v5, x5, T5
r6, a6, v6, x6, T6
r7, a7, v7, x7, T7

B

# FIG 5

$$T4 = \frac{x5-x4}{vZ}$$ S15

T4 ≥ 0? S16

OK

Error

vZ'=vZ S18

vZ- S19

STOP

## FIG 6

```
        │
        ▼
┌─────────────────────┐
│      AF, TA         │──── S21
└─────────────────────┘
        │
        ▼
┌─────────────────────┐
│    TAm=MAX(TA)      │──── S22
└─────────────────────┘
        │
        ▼
┌─────────────────────┐
│  TA=TAm → AF'=AF    │──── S23
└─────────────────────┘
        │
        ▼
┌─────────────────────┐
│  TA<TAm → AF'≠AF    │──── S24
│       TA'=TAm       │
└─────────────────────┘
        │
        ▼
```

## FIG 7

```
        ┌──────────────────────────────┐
        ▼                              │
┌─────────────────────┐               │
│      vZ'=vZ         │──── S31       │
└─────────────────────┘               │
        │                             │
        ▼                             │
┌─────────────────────┐               │
│       vZ-           │──── S32       │
└─────────────────────┘               │
        │                             │
        ▼                             │
┌─────────────────────┐               │
│      AF, TA         │──── S33       │
└─────────────────────┘               │
        │                             │
        ▼                             │
      ╱─────────╲                     │
     ╱  TA>TAm?  ╲────────────────────┘
     ╲           ╱
      ╲─────────╱ ──── S34
        │
        ▼
┌─────────────────────┐
│ vZ ∈ [vZ, vZ']:TA=TAm│──── S35
└─────────────────────┘
        │
        ▼
```

## FIG 8

B1

E1

P1

A1

P2

8

A2

E2    B2

## FIG 9

S41 — OK?

S42 — AF', TAm

+

−

P1, P2, ··· — S43

E1 → P1: AF', TAm
P1 → P2: AF', TAm
P2 → A2: AF', TAm

— S44

**Europäisches Patentamt**
**European Patent Office**
**Office européen des brevets**

# EUROPÄISCHER RECHERCHENBERICHT

Nummer der Anmeldung

EP 18 19 4060

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2009 024130 A1 (UNIV ILMENAU TECH [DE]) 2. Dezember 2010 (2010-12-02) * Absätze [0003] - [0005] * * Absätze [0083] - [0085]; Abbildung 3 * * Absatz [0106]; Abbildung 8 * ----- | 1-11 | INV. G05B19/416 |
| X | DE 10 2010 013525 A1 (WEIS GMBH SONDERMASCHINENTECHNIK [DE]) 14. Juli 2011 (2011-07-14) | 1,7,9-11 | |
| Y | * Absätze [0030] - [0040]; Abbildungen 1,2 * ----- | 2-6,8 | |
| Y,D | Haschke R, Weitnauer E, Ritter H.: "On-Line Planning of Time-Optimal, Jerk-Limited Trajectories", Universität Bielefeld (Preprint) Int. Conf. on Intelligent Robots and Systems, 2008, XP002789776, Universität Bielefeld Gefunden im Internet: URL:https://ni.www.techfak.uni-bielefeld.de/files/HaschkeWeitnauerRitter08-OPT.pdf * das ganze Dokument * ----- | 2-6,8 | RECHERCHIERTE SACHGEBIETE (IPC) G05B |

Der vorliegende Recherchenbericht wurde für alle Patentansprüche erstellt

| Recherchenort | Abschlußdatum der Recherche | Prüfer |
|---|---|---|
| Den Haag | 15. März 2019 | Groen, Fokke |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

**ANHANG ZUM EUROPÄISCHEN RECHERCHENBERICHT**
**ÜBER DIE EUROPÄISCHE PATENTANMELDUNG NR.**

EP 18 19 4060

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-03-2019

| Im Recherchenbericht angeführtes Patentdokument | Datum der Veröffentlichung | Mitglied(er) der Patentfamilie | Datum der Veröffentlichung |
|---|---|---|---|
| DE 102009024130 A1 | 02-12-2010 | DE 102009024130 A1<br>WO 2010136586 A1 | 02-12-2010<br>02-12-2010 |
| DE 102010013525 A1 | 14-07-2011 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ROBERT HASCHKE et al.** *On-Line Planning of Time-Optimal, Jerk-Limited Trajectories,* 17. August 2018, https://ni.www.tech-fak.uni-biele-feld.de/files/HaschkeWeitnauerRitter08-OPT.pdf